# EUROPÄISCHE PATENTSCHRIFT

(11) **EP 1 756 966 B1**
(45) Veröffentlichungstag und Bekanntmachung des Hinweises auf die Patenterteilung: **11.07.2012**
(21) Anmeldenummer: 05747045.2
(22) Anmeldetag: 25.05.2005
(51) Int. Cl.: H04B 5/02, H04M 1/675, H04W 12/12

(54) **TELEKOMMUNIKATIONSANORDNUNG**
TELECOMMUNICATION SYSTEM
DISPOSITIF DE TELECOMMUNICATION

(30) Priorität: 04.06.2004 DE 102004027311
(43) Veröffentlichungstag der Anmeldung: 28.02.2007
(73) Patentinhaber: Giesecke & Devrient GmbH, 81677 München (DE)
(72) Erfinder: FINKENZELLER, Klaus, 85774 Unterföhring (DE); SCHILLER, Christoph, 81667 München (DE); BARTSCH, Armin, 82194 Gröbenzell (DE)
(86) Internationale Anmeldenummer: PCT/EP2005/005669
(87) Internationale Veröffentlichungsnummer: WO 2005/119931

(56) Entgegenhaltungen:
- DE-A1- 10 012 057
- DE-A1- 10 105 058
- DE-A1- 10 214 764
- US-A- 5 553 314

## Beschreibung

Die Erfindung betrifft eine Telekommunikationsanordnung. Weiterhin betrifft die Erfindung ein Verfahren zum Betreiben einer Telekommunikationsanordnung.

Zum Betreiben eines Mobilfunktelefons ist in der Regel ein Sicherheitsmodul erforderlich, das als eine Chipkarte ausgebildet ist und in das Mobilfunktelefon eingesteckt ist. Im Sicherheitsmodul sind Kenndaten gespeichert, mit deren Hilfe sich die Identität des Inhabers des Sicherheitsmoduls feststellen lässt und eine Authentisierung des Mobilfunktelefons gegenüber dem Mobilfunknetz durchgeführt werden kann. Die Authentisierung wird jeweils wenigstens im Rahmen der Anmeldung des Mobilfunktelefons im Mobilfunknetz durchgeführt, um eine missbräuchliche Inanspruchnahme des Mobilfunknetzes zu verhindern. Durch das Sicherheitsmodul wird dem Mobilfunktelefon eine Rufnummer zugewiesen, unter der das Mobilfunktelefon im Mobilfunknetz erreichbar ist und unter der ausgehende Gespräche abgerechnet werden. Weiterhin dient das Sicherheitsmodul beispielsweise der Speicherung eines persönlichen Telefonbuchs, von Kurznachrichten und von persönlichen Einstellungen des Mobilfunktelefons. Zur Herstellung einer Datenverbindung zwischen dem Mobilfunktelefon und dem Sicherheitsmodul und zur Zuführung diverser Versorgungssignale weist das Sicherheitsmodul genormte Kontaktflächen auf, die von einer Kontaktiereinheit des Mobilfunktelefons kontaktiert werden.

Derartige aus einem Mobilfunktelefon und einem Sicherheitsmodul bestehende Telekommunikationsanordnungen haben sich in der Praxis bestens bewährt. Allerdings besteht ein gewisser Nachteil darin, dass bei einem Verlust des Mobilfunktelefons, insbesondere im eingeschalteten Zustand, das Mobilfunktelefon missbräuchlich verwendet werden kann. Beispielsweise können ausgehende Gespräche geführt werden, die unter der durch das Sicherheitsmodul zugewiesenen Rufnummer abgerechnet werden, so dass dem rechtmäßigen Inhaber des Sicherheitsmoduls ein finanzieller Schaden zugefügt wird. Die für die Inbetriebnahme des Mobilfunktelefons üblicherweise erforderliche PIN-Eingabe bietet nur dann einen Schutz gegen Missbrauch, wenn das Mobilfunktelefon zum Zeitpunkt des Verlusts ausgeschaltet ist.

Aus der Druckschrift US 5 553 314 A ist ein Telekommunikationssystem bekannt, das aus einem Telekommunikationsgerät und einer Konfigurationseinrichtung sowie einer Schnittstelle zur Durchführung einer kontaktlosen Datenübertragung zwischen dem Telekommunikationsgerät und der Konfigurationseinrichtung besteht. Die Konfigurationseinrichtung ist dabei als ein externes Modul ausgebildet, das Konfigurationsdaten oder auch Identifizierungscodes für den Netzzugang enthält. Die Konfigurationsdaten werden mit dem Einschalten des Telekommunikationsgerätes übertragen und im Telekommunikationsgerät bis zum Ausschalten des Gerätes gespeichert.

Der Erfindung liegt die Aufgabe zugrunde, eine missbräuchliche Verwendung eines Telekommunikationsgeräts, insbesondere eine Inanspruchnahme kostenpflichtiger Dienste, durch einen unberechtigten Dritten möglichst zu verhindern.

Diese Aufgabe wird durch eine Telekommunikationsanordnung mit der Merkmalskombination des Anspruchs 1 und einem Verfahren zum Betreiben einer Telekommunikationseinrichtung gemäß Anspruch 17 gelöst.

Die erfindungsgemäße Telekommunikationsanordnung weist ein Telekommunikationsgerät zur Abwicklung wenigstens eines über ein Telekommunikationsnetzwerk zur Verfügung gestellten Dienstes und eine Sicherheitseinrichtung auf. Das Telekommunikationsgerät verfügt über eine Schnittstelle zur Durchführung einer kontaktlosen Datenübertragung. In der Sicherheitseinrichtung sind Daten gespeichert, die für eine Anmeldung des Telekommunikationsgeräts im Telekommunikationsnetzwerk bzw. zur Anmeldung zu einem der angebotenen Dienste erforderlich sind. Die erfindungsgemäße Telekommunikationsanordnung zeichnet sich dadurch aus, dass die Sicherheitseinrichtung als ein externes Sicherheitsmodul ausgebildet ist, das außerhalb des Telekommunikationsgeräts angeordnet ist und über die Schnittstelle des Telekommunikationsgeräts Daten vom externen Sicherheitsmodul zum Telekommunikationsgerät kontaktlos übertragbar sind. Die für die Anmeldung im Telekommunikationsnetzwerk erforderlichen Daten werden im Telekommunikationsgerät zwischengespeichert und sind während der Zeit der Zwischenspeicherung für die Inanspruchnahme von Diensten des Telekommunikationsnetzwerks nutzbar. Dies hat den Vorteil, dass die Häufigkeit der Datenübertragung vom externen Sicherheitsmodul zum Telekommunikationsgerät reduziert werden kann und das externe Sicherheitsmodul für das Telekommunikationsgerät nicht ununterbrochen erreichbar sein muss. Insbesondere werden die für die Anmeldung im Telekommunikationsnetzwerk erforderlichen Daten für eine vorgebbare Zeit zwischengespeichert. Dadurch wird eine potentiell missbräuchliche Nutzung des Telekommunikationsgeräts ohne das externe Sicherheitsmodul zeitlich begrenzt. Um eine abrupte Unterbrechung zu verhindern, wird bei einer begonnenen Inanspruchnahme eines Dienstes des Telekommunikationsnetzwerks eine Überschreitung der vorgegebenen Zeit bis zur Beendigung der Inanspruchnahme des Dienstes zugelassen.

Die Erfindung hat den Vorteil, dass bei einem Verlust oder Diebstahl des Telekommunikationsgeräts ein sehr guter Schutz vor einer missbräuchlichen Verwendung besteht. Durch die Anordnung des externen Sicherheitsmoduls außerhalb des Telekommunikationsgeräts ist es relativ unwahrscheinlich, dass das Telekommunikationsgerät und das externe Sicherheitsmodul gleichzeitig abhanden kommen. Somit ist der finanzielle Schaden in der Regel auf den Wert des Telekommunikationsgeräts begrenzt. Ein weiterer Vorteil besteht darin, dass die erhöhte Sicherheit nicht zu Lasten der Bedienungsfreundlichkeit des Telekommunikationsgeräts geht. Vielmehr können einige Abläufe sogar komfortabler gestaltet werden, als dies bei einer Sicherheitseinrichtung innerhalb des Telekommunikationsgeräts der Fall ist.

Die erfindungsgemäße Telekommunikationsanordnung ist vorzugsweise so ausgebildet, dass vor einer Übertragung der zur Anmeldung im Telekommunikationsnetzwerk erforderlichen Daten vom externen Sicherheitsmodul an das Telekommunikationsgerät eine korrekte Eingabe einer Geheiminformation am Telekommunikationsgerät erforderlich ist. Dadurch wird eine missbräuchliche Verwendung des externen Sicherheitsmoduls erheblich erschwert, falls das externe Sicherheitsmodul abhanden kommt.

Um einen besonders guten Schutz vor einer missbräuchlichen Nutzung des Telekommunikationsgeräts zu erzielen, kann die erfindungsgemäße Telekommunikationsanordnung so ausgebildet werden, dass vor einer Inanspruchnahme eines kostenpflichtigen Dienstes des Telekommunikationsnetzwerks eine Datenübertragung vom externen Sicherheitsmodul zum Telekommunikationsgerät erforderlich ist.

Wenn eine flexible Nutzung des Telekommunikationsgeräts gewünscht wird, kann vorgesehen werden, dass eine Anmeldung des Telekommunika tionsgeräts im Telekommunikationsnetzwerk mittels verschiedener externer Sicherheitsmodule möglich ist.

Wird ein besonders hohes Sicherheitsniveau gewünscht, so kann dem Telekommunikationsgerät wenigstens ein externes Sicherheitsmodul derart zugeordnet sein, dass eine Anmeldung des Telekommunikationsgeräts im Telekommunikationsnetzwerk nur mittels des zugeordneten externen Sicherheitsmoduls möglich ist. Die Zuordnung kann insbesondere über eine Seriennummer des externen Sicherheitsmoduls erfolgen. Wenn dem Telekommunikationsgerät mehrere externe Sicherheitsmodule zugeordnet werden, lässt sich zudem eine gewisse Flexibilität bei der Nutzung des Telekommunikationsgeräts erzielen.

Bei einer vorteilhaften Weiterbildung der erfindungsgemäßen Telekommunikationsanordnung ist das Ausmaß der Nutzung des Telekommunikationsgeräts für jedes externe Sicherheitsmodul individuell vorgebbar. Dadurch kann speziellen Anwendungsszenarien optimal Rechnung getragen werden.

Die erfindungsgemäße Telekommunikationsanordnung kann auch so weitergebildet werden, dass zusätzlich zum externen Sicherheitsmodul ein internes Sicherheitsmodul vorgesehen ist, das innerhalb des Telekommunikationsgeräts angeordnet ist. Dabei kann dem internen Sicherheitsmodul wenigstens ein externes Sicherheitsmodul derart zugeordnet werden, dass eine Anmeldung des Telekommunikationsgeräts, in dem das interne Sicherheitsmodul angeordnet ist, im Telekommunikationsnetzwerk nur mittels des zugeordneten externen Sicherheitsmoduls möglich ist. Besonders vorteilhaft ist es, wenn mit dem internen Sicherheitsmodul eine eingeschränkte Nutzung des Telekommunikationsgeräts unabhängig vom externen Sicherheitsmodul möglich ist. Damit lässt sich in der Regel ein optimaler Ausgleich zwischen der Häufigkeit der Zugriffe auf das externe Sicherheitsmodul und dem erzielten Sicherheitsniveau erreichen. Beispielsweise kann vorgesehen werden, dass im internen Sicherheitsmodul oder im Telekommunikationsgerät ein Telefonbuch gespeichert ist und das Telekommunikationsgerät für die Einträge des Telefonbuchs unabhängig vom externen Sicherheitsmodul genutzt werden kann. Dadurch lässt sich die Anzahl der erforderlichen Zugriffe auf das externe Sicherheitsmodul vergleichsweise gering halten und dennoch ein sehr hohes Sicherheitsniveau erreichen, da eine auf die Telefonbucheinträge beschränkte Nutzung für einen Dritten in der Regel nicht von Interesse ist.

Das externe Sicherheitsmodul kann beispielsweise als eine kontaktlose Chipkarte oder als ein in einer anderen Bauform ausgebildeter Transponder ausgebildet sein. Ebenso ist es auch möglich, dass die Funktion des externen Sicherheitsmoduls von einem elektronischen Gerät übernommen wird, das über eine Schnittstelle zur kontaktlosen Datenübertragung und über eine Software zur Nachbildung der Funktionsweise des externen Sicherheitsmoduls verfügt. Dabei ist es besonders vorteilhaft, wenn die Software über eine Online-Verbindung in das elektronische Gerät ladbar ist, da sich dadurch sehr vielfältige Anwendungsmöglichkeiten ergeben.

Das Telekommunikationsgerät kann als ein Mobilfunktelefon oder ein Festnetztelefon ausgebildet sein. Die Schnittstelle zur kontaktlosen Datenübertragung ist vorzugsweise als eine Nahfeld- Schnittstelle ausgebildet.

Die Erfindung bezieht sich weiterhin auf eine Sicherheitseinrichtung für ein Telekommunikationsgerät zur Abwicklung wenigstens eines über ein Telekommunikationsnetzwerk zur Verfügung gestellten Dienstes. In der erfindungsgemäßen Sicherheitseinrichtung sind Daten gespeichert, die für eine Anmeldung des Telekommunikationsgeräts im Telekommunikationsnetzwerk erforderlich sind. Die Besonderheit der erfindungsgemäßen Sicherheitseinrichtung besteht darin, dass sie als ein externes Sicherheitsmodul ausgebildet ist, das außerhalb des Telekommunikationsgeräts betreibbar ist, wobei Daten vom externen Sicherheitsmodul zum Telekommunikationsgerät kontaktlos übertragbar sind.

Außerdem bezieht sich die Erfindung auf ein Verfahren zum Betreiben einer Telekommunikationsanordnung mit einem Telekommunikationsgerät zur Abwicklung wenigstens eines über ein Telekommunikationsnetzwerk zur Verfügung gestellten Dienstes und einer Sicherheitseinrichtung. Das Telekommunikationsgerät verfügt über eine Schnittstelle zur Durchführung einer kontaktlosen Datenübertragung. In der Sicherheitseinrichtung sind Daten gespeichert, die für eine Anmeldung des Telekommunikationsgeräts im Telekommunikationsnetzwerk erforderlich sind. Das erfindungsgemäße Verfahren zeichnet sich dadurch aus, dass als Sicherheitseinrichtung ein externes Sicherheitsmodul eingesetzt wird und dieses externe Sicherheitsmodul außerhalb des Telekommunikationsgeräts in Übertragungsreichweite zur Schnittstelle des Telekommunikationsgeräts angeordnet wird, um über die Schnittstelle Daten vom externen Sicherheitsmodul zum Telekommunikationsgerät kontaktlos zu übertragen.

Die Erfindung wird nachstehend anhand der in der Zeichnung dargestellten Ausführungsbeispiele erläutert.

Es zeigen:
- Fig. 1: ein erstes Ausführungsbeispiel der erfindungsgemäßen Telekommunikationsanordnung in einer vereinfachten Blockdarstellung,
- Fig. 2: ein zweites Ausführungsbeispiel der erfindungsgemäßen Telekommunikationsanordnung in einer Fig. 1 entsprechenden Darstellung und
- Fig. 3: ein drittes Ausführungsbeispiel der erfindungsgemäßen Telekommunikationsanordnung in einer Fig. 1 entsprechenden Darstellung.

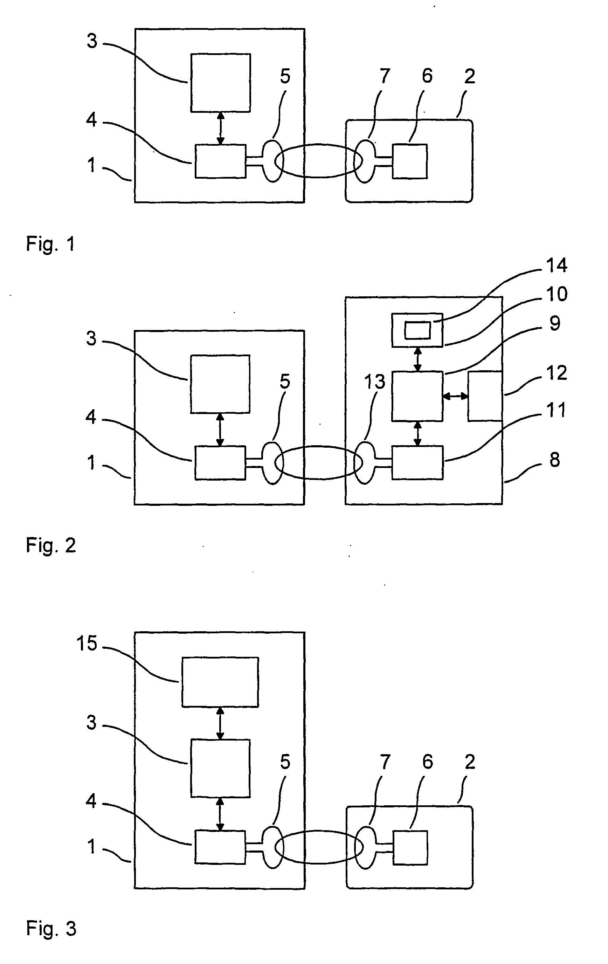

Fig. 1 zeigt ein erstes Ausführungsbeispiel der erfindungsgemäßen Telekommunikationsanordnung in einer vereinfachten Blockdarstellung. Die Telekommunikationsanordnung weist ein Mobilfunktelefon 1 und ein außerhalb des Mobilfunktelefons 1 angeordnetes externes Sicherheitsmodul 2 auf. Aus Gründen der Übersichtlichkeit sind vom Mobilfunktelefon 1 nur einige wenige Komponenten dargestellt, die im Zusammenhang mit der Erfindung von Interesse sind. Das Mobilfunktelefon 1 verfügt über eine Steuerelektronik 3, eine mit der Steuerelektronik 3 verbundene NFC-Schnittstelle 4 oder eine sonstige Schnittstelle für eine kontaktlose Datenübertragung und eine an der NFC-Schnittstelle 4 angeschlossene Antenne 5. NFC steht für Near Field Communication und bezeichnet eine Datenübertragung mittels Nahfeldern. Die NFC-Schnittstelle 4 ist vorzugsweise so ausgebildet, dass die Datenübertragung mittels magnetischer Felder im Frequenzbereich 13,56 MHz erfolgt. Die Übertragungsreichweite beträgt dabei typischerweise etwa 20 cm. Über die NFC-Schnittstelle 4 kann das Mobilfunktelefon 1 kontaktlos mit dem externen Sicherheitsmodul 2 kommunizieren. Das externe Sicherheitsmodul 2 weist einen integrierten Schaltkreis 6 auf, an den eine Antenne 7 angeschlossen ist. Das externe Sicherheitsmodul 2 kann beispielsweise als eine kontaktlose Chipkarte, insbesondere in der Bauform ID1 oder ID00, ausgebildet sein. Ebenso kann das externe Sicherheitsmodul 2 auch als ein Transponder in Form eines Schlüsselanhängers, eines Ringes, eines Bestandteils einer Armbanduhr usw. ausgebildet sein.

Im integrierten Schaltkreis 6 des externen Sicherheitsmoduls 2 sind diverse Daten für den Betrieb des Mobilfunktelefons 1 gespeichert. Diese Daten werden für eine Anmeldung des Mobilfunktelefons 1 in einem Mobilfunknetz benötigt. Außerdem wird dem Mobilfunktelefon 1 mit diesen Daten eine Rufnummer zugewiesen, unter der das Mobilfunktelefon 1 im Mobilfunknetz telefonisch erreicht werden kann und unter der vom Mobilfunktelefon 1 ausgehende Gespräche oder sonstige kostenpflichtige Dienste abgerechnet werden. Weiterhin können die Daten des externen Sicherheitsmoduls 2 Telefonbucheinträge umfassen, um für häufig benutzte Rufnummern einen komfortablen Verbindungsaufbau zu ermöglichen. Ebenso können auch individuelle Einstellungen des Mobilfunktelefons 1 im integrierten Schaltkreis 6 gespeichert sein.

Nach dem Einschalten des Mobilfunktelefons 1 werden die zur Anmeldung im Mobilfunknetz benötigten Daten über die NFC-Schnittstelle 4 des Mobilfunktelefons 1 aus dem externen Sicherheitsmodul 2 ausgelesen. Hierzu ist es erforderlich, dass sich das externe Sicherheitsmodul 2 in Übertragungsreichweite zur NFC-Schnittstelle 4 des Mobilfunktelefons 1 befindet. Um eine Verwendung des externen Sicherheitsmoduls 2 durch einen unberechtigten Dritten zu verhindern, kann das Auslesen der Daten aus dem externen Sicherheitsmodul 2 von einer korrekten Eingabe einer persönlichen Geheimzahl mittels einer nicht figürlich dargestellten Tastatur des Mobilfunktelefons 1 abhängig gemacht werden. Eine Missbrauchsgefahr besteht insbesondere dann, wenn das externe Sicherheitsmodul 2 verloren geht oder gestohlen wird. Mit Hilfe der aus dem externen Sicherheitsmodul 2 ausgelesenen Daten wird das Mobilfunktelefon 1 im Mobilfunknetz angemeldet, so dass mit dem Mobilfunktelefon 1 Gespräche entgegengenommen und geführt werden können, Daten beispielsweise in Form von Kurznachrichten empfangen oder gesendet werden können sowie ggf. andere vom Mobilfunknetz zur Verfügung gestellte Dienste in Anspruch genommen werden können.

Die zur Anmeldung im Mobilfunknetz benötigten Daten des externen Sicherheitsmoduls 2 werden für eine vorgegebene Zeit oder bis zum Ausschalten des Mobilfunktelefons 1 im Mobilfunktelefon 1 zwischengespeichert. Bei einem laufenden Gespräch verlängert sich diese Zeit bis zur Beendigung des Gesprächs, um eine ungewollte Gesprächsunterbrechung zu vermeiden. Durch die Zwischenspeicherung kann eine Erreichbarkeit des Mobilfunktelefons 1 unter der Rufnummer, unter der die Anmeldung im Mobilfunknetz durchgeführt wurde, für eingehende Anrufe und Datenpakete gewährleistet werden. Um dennoch zu verhindern, dass das Mobilfunktelefon 1 mit den zwischengespeicherten Daten beispielsweise nach einem Verlust missbräuchlich verwendet wird, ist vor jedem Ausführen einer kostenpflichtigen Aktion, wie beispielsweise einem ausgehenden Anruf, eine erneute Kommunikation mit dem externen Sicherheitsmodul 2 vorgesehen. Nur bei einer erfolgreichen Abwicklung dieser Kommunikation wird die kostenpflichtige Aktion ausgeführt.

Um im Bedarfsfall jeweils eine Kommunikation des Mobilfunktelefons 1 mit dem externen Sicherheitsmodul 2 zu ermöglichen, muss sich das externe Sicherheitsmodul 2 in Übertragungsreichweite zur NFC-Schnittstelle 4 des Mobilfunktelefons 1 befinden. Dies kann beispielsweise dadurch erreicht werden, dass das externe Sicherheitsmodul 2 in einer Tasche in der Kleidung des Inhabers des externen Sicherheitsmoduls 2 aufbewahrt wird. Da die Kommunikation zwischen dem Mobilfunktelefon 1 und dem externen Sicherheitsmodul 2 kontaktlos erfolgt, kann das externe Sicherheitsmodul 2 während der Kommunikation in der Tasche verbleiben. Durch eine Aufbewahrung des externen Sicherheitsmoduls 2 getrennt vom Mobilfunktelefon 1 lässt sich das Risiko eines gemeinsamen Verlustes oder Diebstahls des Mobilfunktelefons 1 und des externen Sicherheitsmoduls 2 relativ gering halten. Auf Basis der vorstehend beschriebenen Maßnahmen lässt sich dadurch bei einem Verlust des Mobilfunktelefons 1 der finanzielle Schaden auf den Wert des Mobilfunktelefons 1 begrenzen.

Darüber hinaus eröffnet das externe Sicherheitsmodul 2 die Möglichkeit einer sehr flexiblen Nutzung des Mobilfunktelefons 1. Das Mobilfunktelefon 1 kann an einen Dritten weitergegeben werden, der seinerseits über ein eigenes externes Sicherheitsmodul 2 verfügt. Der Dritte kann dann das Mobilfunktelefon 1 mit seinem externen Sicherheitsmodul 2 nutzen, ohne hierfür eigens Vorkehrungen treffen zu müssen. Insbesondere entfällt das Öffnen des Mobilfunktelefons 1, das für ein Auswechseln eines innerhalb des Mobilfunktelefons 1 angeordneten Sicherheitsmoduls erforderlich wäre. Der Umfang der Nutzungsmöglichkeiten des Mobilfunktelefons 1 kann für verschiedene externe Sicherheitsmodule 2 unterschiedlich geregelt sein.

Beispielsweise können Eltern und ihre Kinder mit jeweils eigenen externen Sicherheitsmodulen 2 dasselbe Mobilfunktelefon 1 nutzen. Dabei kann bei den externen Sicherheitsmodulen 2 der Eltern eine uneingeschränkte Nutzung vorgesehen sein und bei den externen Sicherheitsmodulen 2 der Kinder lediglich eine eingeschränkte Nutzung zugelassen werden, bei der beispielsweise Auslandsgespräche ausgeschlossen sind.

Das Prinzip der wechselnden Nutzer mit eigenen externen Sicherheitsmodulen 2 lässt sich nicht nur bei Mobilfunktelefonen 1, sondern auch bei Festnetztelefonen, die einem wechselnden Nutzerkreis zugänglich sind, anwenden. Eine derartige Situation kann beispielsweise bei einem Festnetztelefon in einem Hotelzimmer oder einem öffentlich zugänglichen Festnetztelefon vorliegen. Um eine Nutzung des Festnetztelefons mit einem externen Sicherheitsmodul 2 zu ermöglichen, wird das Festnetztelefon mit einer NFC-Schnittstelle 4 ausgerüstet. Dadurch ist es möglich, das Festnetztelefon zu nutzen, wenn sich ein externes Sicherheitsmodul 2 in Übertragungsreichweite zur NFC-Schnittstelle 4 des Festnetztelefons befindet. Zusätzlich kann die Eingabe einer persönlichen Geheimzahl am Festnetztelefon verlangt werden.

Bei der Nutzung des Festnetztelefons kann jeweils vorgesehen werden, dass ein auf dem externen Sicherheitsmodul 2 gespeichertes Telefonbuch sowie eine vom Inhaber des externen Sicherheitsmoduls 2 eingestellte Konfiguration bzw. ein dem Inhaber gewährter Tarif verfügbar ist. Die mit dem Festnetztelefon geführten Gespräche werden über die Rufnummern abgerechnet, die den externen Sicherheitsmodulen 2 zugeordnet sind.

In einer Abwandlung der Erfindung wird auf diese Flexibilität der Benutzung des Mobilfunktelefons 1 verzichtet, um einen besonders wirksamen Missbrauchsschutz im Falle des Verlustes des Mobilfunktelefons 1 zu erreichen. Hierzu wird eine Zuordnung zwischen dem Mobilfunktelefon 1 und einem externen Sicherheitsmodul 2 derart hergestellt, dass das Mobilfunktelefon 1 ausschließlich mit dem zugeordneten externen Sicherheitsmodul 2 im Mobilfunknetz angemeldet werden kann. Die Zuordnung kann beispielsweise über eine eindeutige Seriennummer des externen Sicherheitsmoduls 2 erfolgen. In entsprechender Weise ist es auch möglich, einem Mobilfunktelefon 1 mehrere externe Sicherheitsmodule 2 zuzuordnen.

Fig. 2 zeigt ein zweites Ausführungsbeispiel der erfindungsgemäßen Telekommunikationsanordnung in einer Fig. 1 entsprechenden Darstellung. Das zweite Ausführungsbeispiel zeichnet sich dadurch aus, dass ein elektronisches Gerät 8, beispielsweise ein Personal Digital Assistant (PDA), vorgesehen ist, das über eine Datenverarbeitungseinheit 9 verfügt. Weiterhin weist das elektronische Gerät 8 einen Speicher 10, eine NFC-Schnittstelle 11 und eine Internetschnittstelle 12 auf, die jeweils mit der Datenverarbeitungseinheit 9 verbunden sind. An die NFC-Schnittstelle 11 ist eine Antenne 13 angeschlossen. Schließlich kann das elektronische Gerät 8 noch über eine Tastatur und eine Anzeige verfügen, die jeweils nicht figürlich dargestellt sind. Im Speicher 10 ist eine Software 14 gespeichert, mit deren Hilfe durch das elektronische Gerät 8 das externe Sicherheitsmodul 2 des ersten Ausführungsbeispiels nachbildet werden kann.

Über die NFC-Schnittstelle 11 kann das elektronische Gerät 8 mit dem Mobilfunktelefon 1 kommunizieren, das identisch aufgebaut ist wie beim ersten Ausführungsbeispiel. Dabei verhält sich das elektronische Gerät 8 dem Mobilfunktelefon 1 gegenüber wie das externe Sicherheitsmodul 2 des ersten Ausführungsbeispiels und ermöglicht insbesondere die Anmeldung des Mobilfunktelefons 1 im Mobilfunknetz. Wenn sich das elektronische Gerät 8 in Kommunikationsreichweite zum NFC-Baustein 4 des Mobilfunktelefons 1 befindet, ist ein externes Sicherheitsmodul 2 für den Betrieb des Mobilfunktelefons 1 nicht erforderlich.

Die Software 14 oder Teile davon können über die Internetschnittstelle 12 herunter geladen werden. Dies ermöglicht beispielsweise bei der Nutzung eines vorausbezahlten Tarifs ein Guthaben mit Hilfe des Internets in das elektronische Gerät 8 herunter zu laden. Außerdem kann die Software 14 zu Demonstrationszwecken aus dem Internet herunter geladen werden. In diesem Fall erlaubt die Software 14 nur eine eingeschränkte Nutzung des Mobilfunknetzes, beispielsweise für einen vorgegebenen Zeitraum und/oder begrenzt auf einen vorgegebenen Anbieter. Im Übrigen gelten die Ausführungen zum ersten Ausführungsbeispiel der Telekommunikationsanordnung, soweit übertragbar, für das zweite Ausführungsbeispiel analog.

Fig. 3 zeigt ein drittes Ausführungsbeispiel der erfindungsgemäßen Telekommunikationsanordnung in einer Fig. 1 entsprechenden Darstellung. Verglichen mit dem ersten Ausführungsbeispiel ist beim dritten Ausführungsbeispiel zusätzlich ein internes Sicherheitsmodul 15 vorhanden, das beispielsweise als eine kontaktbehaftete Chipkarte ausgebildet ist und in das Mobilfunktelefon 1 eingesteckt ist. Im internen Sicherheitsmodul 15 können beispielsweise ein Telefonbuch sowie vom Mobilfunktelefon 1 empfangene Nachrichten gespeichert sein. Zudem kann das interne Sicherheitsmodul 15 als Zwischenspeicher der zur Anmeldung im Mobilfunknetz benötigten Daten des externen Sicherheitsmoduls 2 verwendet werden. Weiterhin kann das interne Sicherheitsmodul 15 eine eingeschränkte Nutzung des Mobilfunktelefons 1 unabhängig vom externen Sicherheitsmodul 2 ermöglichen. Die eingeschränkte Nutzung kann sich beispielsweise auf die Durchführung gebührenfreier Aktionen wie das Entgegennehmen eingehender Gespräche beziehen. Ebenso können im Rahmen der eingeschränkten Nutzung auch bestimmte gebührenpflichtige Aktionen zugelassen werden, wie beispielsweise ausgehende Gespräche zu Rufnummern, die im Telefonbuch des internen Sicherheitsmoduls 15 vermerkt sind. Für darüber hinausgehende Aktionen, wie beliebige sonstige ausgehende Gespräche und für die Änderung der Telefonbucheinträge wird dagegen das externe Sicherheitsmodul 2 benötigt. Im Übrigen gelten die Erläuterungen zum ersten Ausführungsbeispiel für das dritte Ausführungsbeispiel analog.

Das interne Sicherheitsmodul 15 kann auch für die bereits anhand von Fig. 1 beschriebene Zuordnung zwischen dem Mobilfunktelefon 1 und wenigstens einem externen Sicherheitsmodul 2 verwendet werden. In diesem Fall wird die Zuordnung zwischen dem internen Sicherheitsmodul 15 und wenigstens einem externen Sicherheitsmodul 2 durchgeführt.

Das interne Sicherheitsmodul 15 kann auch beim zweiten Ausführungsbeispiel zusätzlich zum elektronischen Gerät 8 eingesetzt werden.

## Patentansprüche

1. Telekommunikationsanordnung mit einem Telekommunikationsgerät (1) zur Abwicklung wenigstens eines über ein Telekommunikationsnetzwerk zur Verfügung gestellten Dienstes und einer Sicherheitseinrichtung, wobei das Telekommunikationsgerät (1) über eine Schnittstelle (4) zur Durchführung einer kontaktlosen Datenübertragung verfügt und in der Sicherheitseinrichtung Daten gespeichert sind, die für eine Anmeldung des Telekommunikationsgeräts (1) im Telekommunikationsnetzwerk und/oder zur Anmeldung eines Dienstes erforderlich sind, wobei die Sicherheitseinrichtung als ein externes Sicherheitsmodul (2) ausgebildet ist, das außerhalb des Telekommunikationsgeräts (1) angeordnet ist, und über die Schnittstelle (4) des Telekommunikationsgeräts (1) Daten vom externen Sicherheitsmodul (2) zum Telekommunikationsgerät (1) kontaktlos übertragbar sind, **dadurch gekennzeichnet, dass** die für die Anmeldung im Telekommunikationsnetzwerk erforderlichen Daten im Telekommunikationsgerät (1) für eine vorgegebene Zeit gespeichert werdens und während der Zeit der Zwischenspeicherung für die Inanspruchnahme von Diensten des Telekommunikationsnetzwerks nutzbar sind, wobei bei einer begonnenen Inanspruchnahme eines Dienstes des Telekommunikationsnetzwerks eine Überschreitung der vorgegebenen Zeit bis zur Beendigung der Inanspruchnahme des Dienstes zugelassen ist.

2. Telekommunikationsanordnung nach Anspruch 1, **dadurch gekennzeichnet, dass** vor einer Übertragung der zur Anmeldung im Telekommunikationsnetzwerk erforderlichen Daten vom externen Sicherheitsmodul (2) an das Telekommunikationsgerät (1) eine korrekte Eingabe einer Geheiminformation am Telekommunikationsgerät (1) erforderlich ist.

3. Telekommunikationsanordnung nach einem der vorhergehenden Ansprüche, **dadurch gekennzeichnet, dass** vor einer Inanspruchnahme eines kostenpflichtigen Dienstes des Telekommunikationsnetzwerks eine Datenübertragung vom externen Sicherheitsmodul (2) zum Telekommunikationsgerät (1) erforderlich ist.

4. Telekommunikationsanordnung nach einem der vorhergehenden Ansprüche, **dadurch gekennzeichnet, dass** eine Anmeldung des Telekommunikationsgeräts (1) im Telekommunikationsnetzwerk mittels verschiedener externer Sicherheitsmodule (2) möglich ist.

5. Telekommunikationsanordnung nach einem der Ansprüche 1 bis 3, **dadurch gekennzeichnet, dass** dem Telekommunikationsgerät (1) wenigstens ein externes Sicherheitsmodul (2) derart zugeordnet ist, dass eine Anmeldung des Telekommunikationsgeräts (1) im Telekommunikationsnetzwerk nur mittels des zugeordneten externen Sicherheitsmoduls (2) möglich ist.

6. Telekommunikationsanordnung nach Anspruch 5, **dadurch gekennzeichnet, dass** die Zuordnung über eine Seriennummer des externen Sicherheitsmoduls (2) erfolgt.

7. Telekommunikationsanordnung nach einem der vorhergehenden Ansprüche, **dadurch gekennzeichnet, dass** das Ausmaß der Nutzung des Telekommunikationsgeräts (1) für jedes externe Sicherheitsmodul (2) individuell vorgebbar ist.

8. Telekommunikationsanordnung nach einem der vorhergehenden Ansprüche, **dadurch gekennzeichnet, dass** zusätzlich zum externen Sicherheitsmödul (2) ein internes Sicherheitsmodul (15) vorgesehen ist, das innerhalb des Telekommunikationsgeräts (1) angeordnet ist.

9. Telekommunikationsanordnung nach Anspruch 8, **dadurch gekennzeichnet, dass** dem internen Sicherheitsmodul (15) wenigstens ein externes Sicherheitsmodul (2) derart zugeordnet ist, dass eine Anmeldung des Telekommunikationsgeräts (1), in dem das interne Sicherheitsmodul (15) angeordnet ist, im Telekommunikationsnetzwerk nur mittels des zugeordneten externen Sicherheitsmoduls (2) möglich ist.

10. Telekommunikationsanordnung nach einem der Ansprüche 8 oder 13, **dadurch gekennzeichnet, dass** mit dem internen Sicherheitsmodul (15) eine eingeschränkte Nutzung des Telekommunikationsgeräts (1) unabhängig vom externen Sicherheitsmodul (2) möglich ist.

11. Telekommunikationsanordnung nach Anspruch 10, **dadurch gekennzeichnet, dass** im internen Sicherheitsmodul (15) oder im Telekommunikationsgerät (1) ein Telefonbuch gespeichert ist und das Telekomnunikationsgerät (1) für die Einträge des Telefonbuchs unabhängig vom externen Sicherheitsmodul (2) genutzt werden kann.

12. Telekommunikationsanordnung nach einem der vorhergehenden Ansprüche, **dadurch gekennzeichnet, dass** das externe Sicherheitsmodul (2) als eine kontaktlose Chipkarte oder als ein in einer anderen Bauform ausgebildeter Transponder ausgebildet ist.

13. Telekommunikationsanordnung nach einem der Ansprüche 1 bis 11, **dadurch gekennzeichnet, dass** die Funktion des externen Sicherheitsmoduls (2) von einem elektronischen Gerät (8) übernommen wird, das über eine Schnittstelle (11) zur kontaktlosen Datenübertragung und über eine Software (14) zur Nachbildung der Funktionsweise des externen Sicherheitsmoduls (2) verfügt.

14. Telekommunikationsanordnung nach Anspruch 13, **dadurch gekennzeichnet, dass** die Software (14) über eine Online-Verbindung in das elektronische Gerät (8) ladbar ist.

15. Telekommunikationsanordnung nach einem der vorhergehenden Ansprüche, **dadurch gekennzeichnet, dass** das Telekommunikationsgerät (1) als ein Mobilfunktelefon oder ein Festnetztelefon ausgebildet ist.

16. Telekommunikationsanordnung nach einem der vorhergehenden Ansprüche, **dadurch gekennzeichnet, dass** die Schnittstelle (4, 11) zur kontaktlosen Datenübertragung (4, 11) als eine Nahfeld- Schnittstelle ausgebildet ist.

17. Verfahren zum Betreiben einer Telekommunikationsanordnung mit einem Telekommunikationsgerät (1) zur Abwicklung wenigstens eines über ein Telekommunikationsnetzwerk zur Verfügung gestellten Dienstes und einer Sicherheitseinrichtung, wobei das Telekommunikationsgerät (1) über eine Schnittstelle (4) zur Durchführung einer kontaktlosen Datenübertragung verfügt und in der Sicherheitseinrichtung Daten gespeichert sind, die für eine Anmeldung des Telekommunikationsgeräts (1) im Telekommunikationsnetzwerk erforderlich sind, wobei als Sicherheitseinrichtung ein externes Sicherheitsmodul (2) eingesetzt wird und dieses externe Sicherheitsmodul (2) außerhalb des Telekommunikationsgeräts (1) in Übertragungsreichweite zur Schnittstelle (4) des Telekommunikationsgeräts (1) angeordnet wird, um über die Schnittstelle (4) Daten vom externen Sicherheitsmodul (2) zum Telekommunikationsgerät (1) kontaktlos zu übertragen, **dadurch gekennzeichnet, dass** die für die Anmeldung im Telekommunikationsnetzwerk erforderlichen Daten im Telekommunikationsgerät (1) für eine vorgegebene Zeit zwischengespeichert werden und während der Zeit der Zwischenspeicherung für die Inanspruchnahme von Diensten des Telekommunikationsnetzwerks nutzbar sind, wobei bei einer begonnenen Inanspruchnahme eines Dienstes des Telekommunikationsnetzwerks eine Überschreitung der vorgegebenen Zeit bis zur Beendigung der Inanspruchnahme des Dienstes zugelassen wird.

## Claims

1. A telecommunication arrangement having a telecommunication device (1) for handling at least one service provided via a telecommunication network, and a security unit, whereby the telecommunication device (1) has an interface (4) for carrying out a contactless data transmission, and in the security unit there are stored data which are necessary for a login of the telecommunication device (1) to the telecommunication network and/or for logging in a service, whereby the security unit is configured as an external security module (2) which is arranged outside the telecommunication device (1), and via the interface (4) of the telecommunication device (1) data can be transmitted in contactless fashion from the external security module (2) to the telecommunication device (1), **characterized in that** the data necessary for the login to the telecommunication network are temporarily stored in the telecommunication device (1) for a specified time and, during the time of the temporary storage, are usable for utilizing services of the telecommunication network, whereby upon a started utilization of a service of the telecommunication network, it is allowed to exceed the specified time until the termination of the utilization of the service.

2. The telecommunication arrangement according to claim 1, **characterized in that** before a transmission of the data necessary for the login to the telecommunication network from the external security module (2) to the telecommunication device (1) a correct input of secret information at the telecommunication device (1) is necessary.

3. The telecommunication arrangement according to any of the preceding claims, **characterized in that** before a utilization of a fee-based service of the telecommunication network a data transmission from the external security module (2) to the telecommunication device (1) is necessary.

4. The telecommunication arrangement according to any of the preceding claims, **characterized in that** there is possible a login of the telecommunication device (1) to the telecommunication network by means of different external security modules (2).

5. The telecommunication arrangement according to any of claims 1 to 3, **characterized in that** the telecommunication device (1) has associated therewith at least one external security module (2) in such a way that a login of the telecommunication device (1) to the telecommunication network is only possible by means of the associated external security module (2).

6. The telecommunication arrangement according to claim 5, **characterized in that** the association is effected via a serial number of the external security module (2).

7. The telecommunication arrangement according to any of the preceding claims, **characterized in that** the extent of using the telecommunication device (1) can be individually specified for each external security module (2).

8. The telecommunication arrangement according to any of the preceding claims, **characterized in that** in addition to the external security module (2) an internal security module (15) is provided, which is arranged within the telecommunication device (1).

9. The telecommunication arrangement according to claim 8, **characterized in that** the internal security module (15) has associated therewith at least one external security module (2) in such a way that a login of the telecommunication device (1), in which the internal security module (15) is arranged, to the telecommunication network is only possibly by means of the associated external security module (2).

10. The telecommunication arrangement according to either of claims 8 or 13, **characterized in that** with the internal security module (15) there is possible a restricted use of the telecommunication device (1) independent of the external security module (2).

11. The telecommunication arrangement according to claim 10, **characterized in that** in the internal security module (15) or in the telecommunication device (1) a phone book is stored, and the telecommunication device (1) can be used for the entries of the phone book independently of the external security module (2).

12. The telecommunication arrangement according to any of the preceding claims, **characterized in that** the external security module (2) is configured as a contactless chip card or as a transponder configured in a different design.

13. The telecommunication arrangement according to any of claims 1 to 11, **characterized in that** the function of the external security module (8) is assumed by an electronic device (8) which has an interface (11) for the contactless data transmission and a software (14) for simulating the functioning of the external security module (2).

14. The telecommunication arrangement according to claim 13, **characterized in that** the software (14) is loadable into the electronic device (8) via an online connection.

15. The telecommunication arrangement according to any of the preceding claims, **characterized in that** the telecommunication device (1) is configured as a mobile phone or a landline phone.

16. The telecommunication arrangement according to any of the preceding claims, **characterized in that** the interface (4, 11) for the contactless data transmission (4, 11) is configured as a near-field interface.

17. A method for operating a telecommunication arrangement having a telecommunication device (1) for handling at least one service provided via a telecommunication network, and a security unit, whereby the telecommunication device (1) has an interface (4) for carrying out a contactless data transmission, and in the security unit there are stored data which are necessary for a login of the telecommunication device (1) to the telecommunication network, whereby as a security unit an external security module (2) is used and this external security module is arranged outside the telecommunication device (1) in transmission range to the interface (4) of the telecommunication device (1), in order to transmit via the interface (4) data in contactless fashion from the external security module (2) to the telecommunication device (1), **characterized in that** the data necessary for the login to the telecommunication network are temporarily stored in the telecommunication device (1) for a specified time and, during the time of the temporary storage, are usable for utilizing services of the telecommunication network, whereby upon a started utilization of a service of the telecommunication network, it is allowed to exceed the specified time until the termination of the utilization of the service.

## Revendications

1. Agencement de télécommunication comprenant un appareil de télécommunication (1) destiné à l'accomplissement d'au moins un service mis à disposition par l'intermédiaire d'un réseau de télécommunication et une unité de sécurité, l'appareil de télécommunication (1) disposant d'une interface (4) destinée à l'exécution d'une transmission de données sans contact et des données nécessaires pour une inscription de l'appareil de télécommunication (1) auprès du réseau de télécommunication et/ou pour l'inscription à un service étant mémorisées dans le unité de sécurité, le unité de sécurité étant réalisé sous forme d'un module de sécurité externe (2) agencé à l'extérieur de l'appareil de télécommunication (1), et des données étant, par l'intermédiaire de l'interface (4) de l'appareil de télécommunication (1), transmissibles sans contact du module de sécurité externe (2) à l'appareil de télécommunication (1), **caractérisé en ce que** les données nécessaires pour l'inscription auprès du réseau de télécommunication sont temporairement mémorisées dans l'appareil de télécommunication (1) durant un temps prédéterminé et sont utilisables durant le temps de la mémorisation temporaire pour le recours à des services du réseau de télécommunication, un dépassement du temps prédéterminé étant, en cas de recours déjà engagé à un service du réseau de télécommunication, admis jusqu'à l'achèvement du recours au service.

2. Agencement de télécommunication selon la revendication 1, **caractérisé en ce que**, avant une transmission, du module de sécurité externe (2) à l'appareil de télécommunication (1), des données nécessaires pour l'inscription auprès du réseau de télécommunication, une entrée correcte d'une information secrète dans l'appareil de télécommunication (1) est nécessaire.

3. Agencement de télécommunication selon une des revendications précédentes, **caractérisé en ce que**, avant un recours à un service payant du réseau de télécommunication, une transmission de données du module de sécurité externe (2) à l'appareil de télécommunication (1) est nécessaire.

4. Agencement de télécommunication selon une des revendications précédentes, **caractérisé en ce qu'**une inscription de l'appareil de télécommunication (1) auprès du réseau de télécommunication est possible au moyen de différents modules de sécurité (2) externes.

5. Agencement de télécommunication selon une des revendications de 1 à 3, **caractérisé en ce qu'**au moins un module de sécurité externe (2) est affecté de telle manière à l'appareil de télécommunication (1) qu'une inscription de l'appareil de télécommunication (1) auprès du réseau de télécommunication n'est possible qu'au moyen du module de sécurité externe (2) affecté.

6. Agencement de télécommunication la revendication 5, **caractérisé en ce que** l'affectation a lieu par l'intermédiaire d'un numéro de série du module de sécurité externe (2).

7. Agencement de télécommunication selon une des revendications précédentes, **caractérisé en ce que** le degré de l'utilisation de l'appareil de télécommunication (1) est individuellement prédéterminable pour chaque module de sécurité externe (2).

8. Agencement de télécommunication selon une des revendications précédentes, **caractérisé en ce que**, en plus du module de sécurité externe (2), un module de sécurité interne (15) est prévu, qui est agencé à l'intérieur de l'appareil de télécommunication (1).

9. Agencement de télécommunication selon la revendication 8, **caractérisé en ce qu'**au moins un module de sécurité externe (2) est affecté de telle manière au module de sécurité interne (15) qu'une inscription de l'appareil de télécommunication (1) dans lequel est agencé le module de sécurité interne (15) auprès du réseau de télécommunication n'est possible qu'au moyen du module de sécurité externe (2) affecté.

10. Agencement de télécommunication selon une des revendications 8 ou 13, **caractérisé en ce que**, avec le module de sécurité interne (15), une utilisation restreinte de l'appareil de télécommunication (1) est possible indépendamment du module de sécurité externe (2).

11. Agencement de télécommunication selon la revendication 10, **caractérisé en ce qu'**un annuaire est mémorisé dans le module de sécurité interne (15) ou dans l'appareil de télécommunication (1) et l'appareil de télécommunication (1) peut être utilisé pour les entrées de l'annuaire indépendamment du module de sécurité externe (2).

12. Agencement de télécommunication selon une des revendications précédentes, **caractérisé en ce que** le module de sécurité externe (2) est réalisé sous forme d'une carte à puce sans contact ou sous forme d'un transpondeur d'un autre type de construction.

13. Agencement de télécommunication selon une des revendications de 1 à 11, **caractérisé en ce que** la fonction du module de sécurité externe (2) être reprise par un appareil électronique (8) qui dispose d'une interface (11) destinée à la transmission de données sans contact et d'un logiciel (14) destiné reproduire le mode de fonctionnement du module de sécurité externe (2).

14. Agencement de télécommunication selon la revendication 13, **caractérisé en ce que** le logiciel (14) est chargeable dans l'appareil électronique (8) par l'intermédiaire d'une connexion en ligne.

15. Agencement de télécommunication selon une des revendications précédentes, **caractérisé en ce que** l'appareil de télécommunication (1) est réalisé sous forme d'un radiotéléphone mobile ou d'un téléphone de réseau fixe.

16. Agencement de télécommunication selon une des revendications précédentes, **caractérisé en ce que** l'interface (4, 11) destinée à la transmission de données sans contact (4, 11) est réalisée sous forme d'une interface à champ proche.

17. Procédé d'exploitation d'un agencement de télécommunication comprenant un appareil de télécommunication (1) destiné à l'accomplissement d'au moins un service mis à disposition par l'intermédiaire d'un réseau de télécommunication et une unité de sécurité, l'appareil de télécommunication (1) disposant d'une interface (4) destinée à l'exécution d'une transmission de données sans contact et des données nécessaires pour une inscription de l'appareil de télécommunication (1) auprès du réseau de télécommunication étant mémorisées dans le unité de sécurité, un module de sécurité externe (2) étant employé en tant que unité de sécurité et ce module de sécurité externe (2) étant agencé à l'extérieur de l'appareil de télécommunication (1) à portée de transmission vers l'interface (4) de l'appareil de télécommunication (1), afin de transmettre sans contact, par l'intermédiaire de l'interface (4), des données du module de sécurité externe (2) à l'appareil de télécommunication (1), **caractérisé en ce que** les données nécessaires pour l'inscription auprès du réseau de télécommunication sont temporairement mémorisées dans l'appareil de télécommunication (1) durant un temps prédéterminé et sont utilisables durant le temps de la mémorisation temporaire pour le recours à des services du réseau de télécommunication, un dépassement du temps prédéterminée étant, en cas de recours déjà engagé à un service du réseau de télécommunication, admis jusqu'à l'achèvement du recours au service.
